# EUROPEAN PATENT APPLICATION

(11) **EP 4 369 133 A1**
(43) Date of publication of application: **15.05.2024**
(21) Application number: 23208681.9
(22) Date of filing: 09.11.2023
(51) Int. Cl.: G05D 1/00

(54) **ANIMAL HUSBANDRY SYSTEM AND BARN THEREWITH**

(30) Priority: 11.11.2022 NL 2033506
(71) Applicant: Lely Patent N.V., 3147 PB Maassluis (NL)
(72) Inventor: VAN DEN BERG, Karel, 3147 PB Maassluis (NL); BLOKLAND, Korstiaan Cornelis, 3147 PB Maassluis (NL); VAN ADRICHEM, Paulus Jacobus Maria, 3147 PB Maassluis (NL); BUIJS, Martinus Cornelis Johannes, 3147 PB Maassluis (NL)
(74) Representative: Octrooibureau Van der Lely N.V.

(57) **Abstract**

A livestock management system for the autonomous performance of an animal-related action comprises an autonomously movable vehicle for performing the animal-related action in a livestock-related space, said system being equipped with an on-board navigation system having a sensor for vehicle movement information and a memory for navigation information, an external vehicle localisation device for repeatedly determining the external position of the vehicle in the livestock-related space, and a communication device for transferring the external position to the memory. The navigation information comprises at least one previous on-board position and a route to be travelled. The vehicle determines an instantaneous on-board position on the basis of the navigation information and the collected vehicle movement information. The on-board navigation system is configured to repeatedly receive the determined external position, and to calibrate the sensor on the basis of the received external positions and/or to update said navigation information in the memory. A livestock building having such a system is similarly provided.

## Description

The present invention relates to a livestock management system for the autonomous performance of an animal-related action, comprising an autonomously movable vehicle which is configured to perform said animal-related action in a livestock-related space and which is equipped with an on-board navigation system which comprises at least one sensor for collecting vehicle movement information and a memory for navigation information, wherein the navigation information comprises at least one previous on-board position, and also at least one route to be travelled by the vehicle in the livestock-related space, wherein the vehicle is configured to determine an instantaneous on-board position on the basis of the navigation information and the collected vehicle movement information.

Autonomous vehicles in a livestock building environment are known per se, such as the Lely Discovery^{®} manure scraper and the Lely Juno^{®} feed-pushing robot. It is clearly important that vehicles of this type are able to move around reliably and precisely. The control system sometimes comprises an external means such as a magnetic strip, but this restricts the flexibility of the navigation. An external system is sometimes provided with beacons, transmitters and the like, acting as a type of local "GPS" system. The disadvantage thereof is that the connection between a system of this type and the vehicle can fail, resulting in a shutdown. For such reasons, an on-board navigation system is usually provided, having routes and a sensor device for orientation. The on-board navigation system sometimes becomes less reliable due to wear affecting wheels, sensors, etc. Fixed points of impact are used in some cases to calibrate the on-board navigation system. However, this a relatively laborious and inflexible calibration method.

An object of the invention is therefore to improve the livestock management system of the indicated type in such a way that the navigation becomes more reliable, and is calibratable more simply and in more ways and at more times.

The invention achieves this object with a livestock management system according to Claim 1, in particular a livestock management system for the autonomous performance of an animal-related action, comprising an autonomously movable vehicle which is configured to carry out said animal-related action in a livestock-related space and which is equipped with an on-board navigation system which comprises at least one sensor for collecting vehicle movement information and a memory for navigation information, an external vehicle localisation device for repeatedly determining the external position of the vehicle in said livestock-related space, and a communication device which is configured to transfer the external position to said memory, wherein the navigation information comprises at least one previous on-board position, and also at least one route to be travelled by the vehicle in the livestock-related space, wherein the vehicle is configured to determine an instantaneous on-board position of the vehicle on the basis of the navigation information and the collected vehicle movement information, wherein the on-board navigation system is configured to receive, in particular repeatedly, the determined external position from the vehicle localisation device, and to calibrate the at least one sensor, and/or to update said navigation information, in particular the instantaneous on-board position and/or an instantaneous direction of travel, in said memory, on the basis of the external position, the external positions, respectively.

If the communication device fails, the vehicle can then nevertheless continue to operate as precisely as possible, on the basis of the most recent position, and direction information. In any event, the on-board position, i.e. as determined by the on-board navigation system, can be updated, or simply replaced, at any time by the external position, thus representing a continuous updating of a zero position, as part of the calibration. This is useful, for example, if a collision, impact or the like has taken place, as a result of which the on-board navigation system is to some extent disrupted. This "doubt" can then be removed by retrieving the external position at that time and accepting it as the on-board position. It is further possible to calibrate the on-board navigation device on virtually every route, on the basis of the images from the external vehicle localisation system. A possible compass or the like which determines a direction of the vehicle, can thus be provided by the on-board navigation system on the basis of a direction as established by the vehicle localisation system, on the basis of the most recent external positions. This will be explained in detail below. Reliability is thus improved for navigation.

In this application, the terms "animal" and "animal-related" are always understood to mean "non-human animal" and "related to a non-human animal". The animal-related action is an action for the purpose of managing the animal, such as feeding, removing manure or other dirt, cleaning of or litter-dispensing in cubicles, generally monitoring animals, etc., wherein the action is carried out by an autonomous vehicle (AGV). Here, the livestock-related space is a space that is suitable for carrying out a livestock-related action, such as a livestock building or a specific part thereof, such as a feeding alley. The "on-board position" can further also comprise a start position, such as a route start position, usually a charging position or a restart position.

Particular embodiments are described in the dependent claims, and also in the part of the description that now follows.

In embodiments, the vehicle localisation system comprises one or more cameras for capturing images of the livestock space, and also an image processing device for processing the images, for recognising at least the vehicle in the images, and for determining said external position of the vehicle in the livestock space on the basis of the images. The cameras are preferably suspended in or in relation to the livestock-related space. A vehicle localisation system of this type having cameras is not susceptible to interference from metal parts, as in the case of radio beacons or the like, has a very high information density and, since the vehicle has a substantially invariable shape, is reliable in recognising the vehicle and the position and possibly the direction thereof. One or more of the cameras can be black-and-white or RGB video cameras, or also 3D cameras. The last-mentioned type can effectively determine a position on its own, whereas, in the case of (2D) video cameras, two or more cameras are desirable in order to determine the position with triangulation or other stereometric methods. However, all this is well known in the prior art. Nevertheless, it is still possible to choose, for example, a combination of one or more transmitters and receivers/beacons as an alternative vehicle localisation system so that, for example, a vehicle with a transmitter can be localised and its position can be determined.

In embodiments, the sensor comprises an odometer which is configured to measure the length of a route travelled by the vehicle. The odometer, or path length measuring device, can comprise any known odometry mechanism, such as a trundle wheel or a device for measuring the number of revolutions completed by a drive wheel or other vehicle wheel. In theory, the travelled path length is sufficient for determining where the vehicle is located on the route to be travelled. Deviations can obviously occur due to a variety of causes such as wheel slip, a change in the circumference or shape of the vehicle wheel, wear or other deviation in the odometer itself, etc.

In particular, the on-board navigation system is configured to determine an, in particular dynamic and/or location-dependent, correction factor for the sensor for correcting the travelled route, wherein the correction factor is the ratio between an on-board path length travelled during a time period as determined by the odometer and an external path length travelled during said period determined by the vehicle localisation device. The on-board navigation system preferably determines a correction factor in order to counteract deviations due to the aforementioned causes. If, for example, the wheel circumference were to decrease by 1/100th, the travelled path length as calculated would have to be divided by 0.99. It is also possible that the surface on which the vehicle travels is locally or as a whole so slippery that wheel slip occurs. Particularly when travelling over a surface where manure and/or urine or feed to be pushed can be present, an occasionally considerable wheel slip can occur. The on-board navigation system can correct by a correction factor for this purpose also. The final correction factor can be a combination of both factors. An important advantage of cameras as part of the vehicle localisation device is that they have an excellent resolution over a large area with regard to determining the position of the vehicle. The on-board navigation system can thus be calibrated, or at least the correction can be calculated, with great precision.

Here, the external path length is the path length as determined by means of the vehicle localisation device. The latter repeatedly determines the position of the vehicle and from this calculates the travelled path length by adding up the distances between consecutive positions. It is obviously desirable for the positions to be sufficiently close to one another in order to prevent the occurrence of substantial changes in direction between two consecutive points, as a result of which the actually travelled distance no longer matches the (geometric) distance between the two positions.

Through communication between the vehicle and the vehicle localisation device, a calibration of this type can be carried out in principle during any desired time period, and (therefore) on any desired part of the route, i.e. a correction factor is determined for that route part, often the location in the livestock space. The on-board navigation system can then use this local correction factor for navigation, ofcourse in particular if the vehicle, for whatever reason, no longer has contact with the vehicle localisation device and therefore has to navigate entirely independently.

Advantageously, the vehicle localisation device is configured to calibrate the odometer by determining a calibration factor, i.e. the smallest value of the correction factor measured over the livestock space. As indicated above, the correction factor is usually a combination of a factor for calibrating the odometer itself, referred to below as the calibration factor, and a factor for correcting wheel slip, wheel wear, etc., i.e. the other influences. It is advantageous if more information relating to the calibration factor is available to the on-board navigation system. A useful insight here is that the calibration factor is in principle constant over the livestock space, and only changes (very) slowly over time. Conversely, the correction factor as a result of wheel slip and the like can in fact change according to the location in the livestock space, and also over time, since the contamination with manure and the like can vary substantially. It is then possible to determine the calibration factor as the minimum of the total calculated (correction) factor on the relevant part of the route or in that part of the livestock space. In particular, this applies in the case where the factors are calculated by dividing the on-board path length, i.e. the path length as determined by the on-board navigation system, by the external path length, i.e. the path length as determined by the external vehicle localisation device. The calibration factor can obviously also be determined as rather the maximum of the total calculated (correction) factor if the inverse ratio is calculated.

Alternatively, but in particular additionally, the sensor comprises a compass which is configured to determine a direction of the vehicle in relation to the real world. The compass can comprise a magnetic compass, a gyroscope or the like. A compass obviously offers very useful information relating to the movement and direction of the vehicle. A compass can also indicate deviations which need to be compensated if possible. The on-board navigation system is preferably configured to calibrate said compass by comparing a direction, in particular the direction of travel, as determined with the compass, with a direction as determined on the basis of the repeatedly determined external positions. With the latter, the vehicle localisation device can determine the direction in space. Once a reference direction has been determined or input for the vehicle localisation device, this will in principle no longer change so that the direction of the vehicle thereby determined can serve as a reference for the on-board navigation system. In particular, the on-board navigation system is thus configured to adopt the direction of the vehicle determined by the vehicle localisation device as the correct direction.

The animal-related action is not particularly restricted. In embodiments, the animal-related action comprises scraping or vacuuming manure, pushing feed or dispensing feed. In such a case, the vehicle correspondingly comprises a manure-scraping vehicle, a feed-pushing vehicle or a feed-dispensing vehicle. Other possibilities, however, such as cleaning a cubicle by removing old litter and bringing in new litter, or even milking a dairy animal with a mobile milking device, are also possible.

The invention also relates to a livestock building having a livestock management system according to the present invention. The advantages of a livestock building of this type are in principle the same as those described for the livestock management system and do not therefore need to be repeated or explained here. The special features described for the livestock management system are in principle applicable in each case to the livestock building according to the invention.

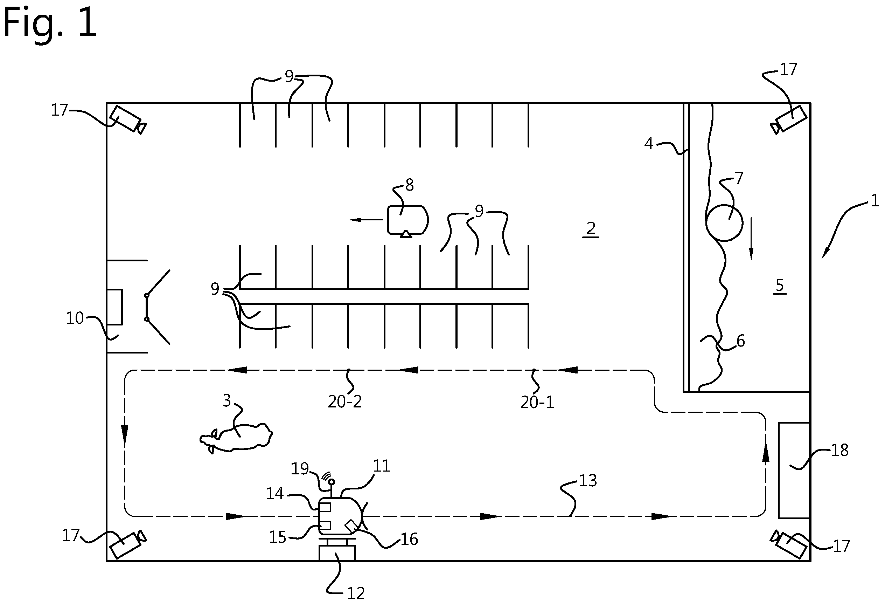

The invention will now be explained in detail with reference to an exemplary embodiment and to the drawing in which the single Figure 1 shows a schematic top view of a livestock building 1 having a livestock management system according to the invention. The livestock building 1 comprises a livestock space 2 for cows 3, and also a feed fence 4, a feeding alley 5 with livestock feed 6 therein, and a feed-pushing vehicle 7.

A litter dispensing vehicle for cubicles 9 is denoted by 8, and a milking robot by 10. A manure-scraping vehicle 11 is located at a charging station 12 as the start of a route 13, and comprises an odometer 14, a compass 15 and a memory 16. Cameras are denoted by 17, an external controller by 18, and a communication device by 19. Finally, 20-1 and 20-2 denote two route points.

In the example shown, the livestock building 1 comprises two livestock-related spaces, i.e. the livestock space 2 in which livestock 3 can move around, and a feeding alley 5. Other spaces, such as a separate milking space, a young livestock space, etc., are certainly possible. For the sake of simplicity, only one cow 3 is shown, but it will be clear that (many) more cows or other livestock, such as goats, can move around.

A number of autonomously movable vehicles are provided in the livestock building 1, such as a feed-pushing vehicle 7, for example the Lely Juno^{®}, a litter dispensing vehicle 8, as described, for example in EP3178315A1, and a manure-scraping vehicle 11, such as a Lely Discovery^{®} or a manure-vacuuming vehicle such as the Lely Collector^{®}. It is obviously also possible to provide different, or even fewer vehicles. A milking robot 10 is also shown, which is not relevant per se to the present invention, unless the milking device is similarly provided on an autonomously movable vehicle ("AGV"). In the example shown, the livestock management system therefore comprises, for example, one or more of the vehicles 7, 8 and 11, and also the cameras 17 and the external controller 18. The invention will be further explained below with reference to the manure-scraping vehicle 11, wherein the features described are also applicable to other vehicles to be provided in the livestock management system.

The manure-scraping vehicle 11 comprises an on-board navigation system having, inter alia, an odometer 14 for measuring the travelled path length, a compass 15 for determining the direction of travel, or at least the orientation, of the vehicle, and a memory 16. The latter comprises, inter alia, information relating to one or more routes 13 to be travelled through the livestock space 2. A vehicle controller which is actively connected to the on-board navigation system is not shown separately. The vehicle controller, or at least the on-board navigation system, is capable of independently choosing and following the route 13. For this purpose, the system collects movement information with a sensor, in this case the travelled path length with the odometer 14, and also the orientation with the compass 15, and determines therefrom the instantaneous position of the vehicle, referred to here as the "on-board position". The collected information is stored at least temporarily in the memory 16.

It is very important that the vehicle follows the route sufficiently precisely, but, for various reasons, deviations can occur, such as wheel slip on slippery surfaces, due to manure, feed, slippery concrete and the like, and also wear or defects. In order to compensate for this, a vehicle localisation device is provided which, in this example, comprises four cameras 17 and an external controller 18 which can communicate with the communication device 19 for transferring data. The number and type of the cameras can in principle be freely chosen provided that the vehicle can be followed by the camera(s) and its position can be determined from images thereof.

The vehicle localisation device, or at least the external controller, repeatedly determines the position of the manure-scraping vehicle 11 by means of, for example, triangulation, or a different position-determining method known per se, from images from the cameras 17. This position is referred to here as the "external position", as opposed to the "on-board position". The vehicle localisation device can further determine the direction of travel from the movement between consecutively determined external positions of the vehicle. These data are forwarded via the communication device 19 to the manure-scraping vehicle 11 which can calibrate its on-board navigation system therewith.

Two positions on the route 13 are considered here as an example, indicated as a first route point 20-1 and a second route point 20-2. These are external positions of the vehicle 11 as determined by the external controller 18, with the image processing device, on the basis of images from the cameras 17, at time *t₁* and *t₂* respectively. At the same points in time, as aligned between the external controller and the vehicle 11, the vehicle 11, or at least the on-board navigation system thereof, similarly determines the position of the vehicle 11, so now as on-board positions. The external positions 20-1 and 20-2 serve as reference positions, and are shown in the figure, in contrast to the on-board positions. The latter are calculated by the on-board navigation system on the basis of the travelled path length as determined by the odometer 14 and the compass 15.

The on-board navigation system subsequently receives the information relating to the external positions from the external controller, via the communication device 19. It then calculates a ratio between the distance for the two external positions and the two on-board positions, i.e. the travelled path length determined by the odometer 14, and calculates therewith the correction factor for adjusting the odometer. The odometer appears, for example, to measure 3% too little, for example due to worn wheels or wheel slip. The on-board navigation system can incorporate this adjustment in the determination of the travelled path length directly into the determination of the travelled route, and therefore into the navigation. If the connection to the vehicle localisation system, or at least the external controller 18, fails, at least the odometer 14 is optimally calibrated. It is furthermore in this way obviously possible for the on-board navigation system, at the time when the connection fails, to take the external position as determined by the external controller 18 as the instantaneous position of the vehicle, so that the navigation can be continued with minimal deviations.

The ratio between the travelled path length as measured by the odometer 14 and as determined by the external controller 18 on the basis of the images from the cameras 17 can therefore be determined for each part of the route 13. If the route 13 can vary freely over the livestock space 2, or similarly for the feeding alley 5 for the vehicle 7, a correction factor can be determined in a location-dependent manner even for the entire livestock-related space 2, 5. This correction factor actually comprises a more or less fixed, or at least only very slowly changing, correction for wear to the vehicle itself, i.e. the calibration, and a correction due to external influences such as wheel slip on the floor (manure, feed, etc.). This latter correction can vary locally to a substantial extent. In principle, the calibration can be determined separately as the smallest deviation in the path length. Because if the slip and the like is zero, only the calibration is visible in the correction factor. In this example, the calibration can therefore be equated with the minimum correction factor. If the connection to the vehicle localisation system has failed and navigation must therefore be performed solely by the on-board navigation system, this can be useful since the vehicle then sometimes also travels in places for which no location-dependent correction factor has (yet) been determined. Then at least the omnipresent calibration factor can still be taken into account.

A correction as described above for the travelled path length can also be carried out for the direction as determined by the compass 15. To do this, the vehicle localisation system, or again at least the external controller 18, determines the direction of travel from the direction from the first route point 20-1 to the second route point 20-2, and sends this to the on-board navigation system. The on-board navigation system compares the direction with the direction determined by the compass 15, and can calibrate said compass therewith.

## Claims

1. Livestock management system for the autonomous performance of an animal-related action, comprising:
- an autonomously movable vehicle which is configured to carry out said animal-related action in a livestock-related space and which is equipped with an on-board navigation system which comprises at least one sensor for collecting vehicle movement information and a memory for navigation information,
- an external vehicle localisation device for repeatedly determining the external position of the vehicle in said livestock-related space, and
- a communication device which is configured to transfer the external position to said memory,
wherein the navigation information comprises at least one previous on-board position, and also at least one route to be travelled by the vehicle in the livestock-related space, wherein the vehicle is configured to determine an instantaneous on-board position of the vehicle on the basis of the navigation information and the collected vehicle movement information,
wherein the on-board navigation system is configured to receive, in particular repeatedly, the determined external position from the vehicle localisation device, and to calibrate the at least one sensor, and/or to update said navigation information, in particular the instantaneous on-board position and/or an instantaneous direction of travel, in said memory, on the basis of the external position, the external positions, respectively.

2. Livestock management system according to Claim 1, wherein the livestock management system comprises one or more cameras for capturing images of the livestock space, and also an image processing device for processing the images, for recognising at least the vehicle in the images, and for determining said external position of the vehicle in the livestock space on the basis of the images.

3. Livestock management system according to one of the preceding claims, wherein the sensor comprises an odometer which is configured to measure the path length travelled by the vehicle.

4. Livestock management system according to Claim 3, wherein the on-board navigation system is configured to determine an, in particular dynamic and/or location-dependent, correction factor for the sensor for correcting the travelled route, wherein the correction factor is the ratio between an on-board path length travelled during a time period as determined by the odometer and an external path length travelled during said period determined by the vehicle localisation device.

5. Livestock management system according to Claim 3 or 4, wherein the vehicle localisation device is configured to calibrate the odometer by determining a calibration factor, i.e. the smallest value of the correction factor measured over the livestock space.

6. Livestock management system according to one of the preceding claims, wherein the sensor comprises a compass which is configured to determine a direction of the vehicle in relation to the real world.

7. Livestock management system according to one of the preceding claims, wherein the animal-related action comprises scraping or vacuuming manure, pushing feed or dispensing feed.

8. Livestock building having a livestock management system according to one of the preceding claims.
